Europäisches Patentamt

European Patent Office

Office européen des brevets

(11) Numéro de publication: **0 248 710**
**A1**

# DEMANDE DE BREVET EUROPEEN

(21) Numéro de dépôt: 87401181.0

(22) Date de dépôt: 26.05.87

(51) Int. Cl.⁴: **G 07 D 1/00**
B 65 H 7/12, G 01 B 15/02

(30) Priorité: 30.05.86 FR 8607807

(43) Date de publication de la demande:
09.12.87 Bulletin 87/50

(84) Etats contractants désignés:
CH DE GB IT LI SE

(71) Demandeur: CQMMISSARIAT A L'ENERGIE ATOMIQUE
31/33, rue de la Fédération
F-75015 Paris (FR)

BULL S.A.
121, avenue de Malakoff
F-75764 Paris Cédex 16 (FR)

(72) Inventeur: **Dupoy, Marc**
**21, rue des Morillons**
**F-75015 Paris (FR)**

**Dumesnil, Patrice**
**3, Allée du Bois Saint-Aubin**
**F-91190 Gif sur Yvette (FR)**

**Mongault, Jacques**
**82, rue Dutot**
**F-75015 Paris (FR)**

**Carisey, Camille**
**13, rue du Général Lacharrière**
**F-94000 Creteil (FR)**

(74) Mandataire: **Mongrédien, André et al**
**c/o BREVATOME 25, rue de Ponthieu**
**F-75008 Paris (FR)**

(54) **Procédé de détection de feuilles superposées, dispositif de mise en oeuvre du procédé et application aux billets de banque.**

(57) La présente invention concerne un procédé de détection de feuilles superposées et le dispositif permettant la mise en oeuvre de ce procédé et son application aux billets de banque. Le procédé de feuilles superposées par évaluation de leur masse surfacique se caractérise en ce qu'il comprend les étapes suivantes :
- défilement des feuilles orientées dans le sens de leur largeur entre une source (C) de particules bêta et un compteur Geiger-Müller (GM) ;
- comptage du nombre de particules reçues par le compteur par mesure de la fréquence $F_g$ des impulsions du compteur (GM) pour déterminer la masse surfacique ;
- élimination des billets à fort taux de superposition par comparaison avec une valeur limite.

FIG. 1

EP 0 248 710 A1

## Description

PROCEDE DE DETECTION DE FEUILLES SUPERPOSEES, DISPOSITIF DE MISE EN OEUVRE DU PROCEDE ET APPLICATION AUX BILLETS DE BANQUE

La présente invention concerne un procédé de détection de feuilles superposées, le dispositif permettant la mise en oeuvre du procédé et l'application, à titre d'exemple, à l'examen de liasses de billets de banque.

Il existe actuellement des dispositifs de détection de superposition de feuilles et notamment dans le domaine bancaire, pour la détection de billets doubles. Ces dispositifs reposent sur un principe de détection mécanique par un galet qui vient palper l'épaisseur des billets défilant dans le sens longitudinal sur un galet d'entraînement. Ce genre de dispositif pose des problèmes de concentricité du galet palpeur et du galet d'entraînement et par ailleurs ne permet que des vitesses de défilement limitées même dans le cas d'un entraînement des billets dans le sens de leur plus grande longueur.

Un premier but de l'invention est donc de pallier les inconvénients de l'art antérieur et de proposer un procédé de détection de feuilles superposées qui permette d'éliminer les feuilles superposées, partiellement ou totalement, des feuilles transportées dans le sens de leur largeur.

Ce premier but est atteint par le fait que le procédé de détection de feuilles superposées par évaluation de leur masse surfacique comprend les étapes suivantes :
défilement de feuilles entre une source de particules et un détecteur de particules,
comptage du nombre de particules reçues par le détecteur en mesurant la fréquence des impulsions du détecteur pour déterminer la masse surfacique, élimination des billets à fort taux de superposition par comparaison de la fréquence de comptage avec une valeur limite.

En résumé, on détermine la baisse de fréquence de comptage due à la présence d'une surépaisseur.

Le premier but précité doit pouvoir être atteint même si la vitesse de défilement des feuilles est importante, de l'ordre de un à deux mètres par seconde notamment.

A cette fin, et selon une autre caractéristique, la comparaison à une valeur limite de fréquence des impulsions du détecteur de particules est obtenue par discrimination entre la fréquence des impulsions du détecteur et la fréquence des impulsions d'un oscillateur de fréquence déterminée FO.

Un autre but de l'invention est de proposer un procédé permettant l'élimination des feuilles doubles dont le taux de superposition est faible.

Ce deuxième but est atteint par le fait que l'on mesure la largeur des feuilles par l'intermédiaire d'une roue codeuse associée au système de transport, la roue codeuse délivrant un nombre d'impulsions proportionnel à la rotation pendant le temps de passage de la feuille, ces impulsions décrémentant un décompteur préchargé à une valeur moyenne représentative d'une largeur normale d'une feuille simple, l'ordre d'élimination correspondant au passage par un seuil du contenu du décompteur.

Un troisième but est de proposer un procédé permettant l'élimination des feuilles trop courtes (par exemple feuille repliée sur elle-même).

Ce troisième but est atteint par le fait qu'un circuit logique branché sur les sorties du décompteur, èmet un ordre d'élimination si, au moment où le signal issu d'un circuit de détection de présence de feuille disparaît, le contenu de ce décompteur n'a pas encore atteint une valeur minimale prédéterminée.

Un autre but de l'invention est de proposer un dispositif permettant la mise en oeuvre du procédé.

Ce but est atteint par le fait que le dispositif comprend une source de particules bêta et un compteur Geiger-Müller disposés de part et d'autre d'un trajet de transport de feuille, un compteur validé par les impulsions du compteur Geiger et commandé par un oscillateur délivrant un signal de fréquence F0, la sortie de débordement du compteur délivrant un signal indiquant, en cas de débordement, un fort taux de superposition des feuilles, une roue codeuse associée au dispositif de transport de feuilles le long du trajet, les impulsions de la roue codeuse décrémentant un décompteur préchargé à une valeur moyenne représentative d'une largeur normale de feuille, un circuit de détection de la présence d'une feuille et un circuit logique prenant en compte les signaux de sortie du circuit de détection de présence de feuilles, du compteur, du décompteur, pour provoquer ou non l'élimination des feuilles par l'élèment moteur d'un aiguillage disposé dans le trajet de transport en aval de la source bêta et du compteur Geiger par rapport au sens de déplacement des feuilles.

Selon une autre caractéristique, le dispositif comporte en série sur la sortie d'un circuit d'alimentation de haute tension du compteur Geiger, une résistance très élevée pour limiter l'intensité du courant de crête délivré par le compteur Geiger.

Selon une autre caractéristique, le dispositif comporte en série entre la sortie du circuit d'alimentation de haute tension et la résistance élevée, une deuxième résistance très élevée destinée à allonger le temps mort du compteur Geiger en vue de limiter le taux de comptage en l'absence de feuilles.

Ceci permet d'augmenter la durée de vie du compteur Geiger.

Un dernier but de l'invention est son utilisation pour la détection de billets de banque.

Ce but est atteint par le fait que le dispositif et le procédé sont appliqués aux billets de banque.

D'autres caractéristiques et avantages de la présente invention apparaîtront plus clairement à la lecture de la description ci-après faite en référence aux dessins annexés dans lesquels :
- la fig. 1 est une vue schématique du dispositif permettant la mise en oeuvre du procédé ;
- la fig. 2 représente le schéma des circuits électroniques du dispositif de l'invention.

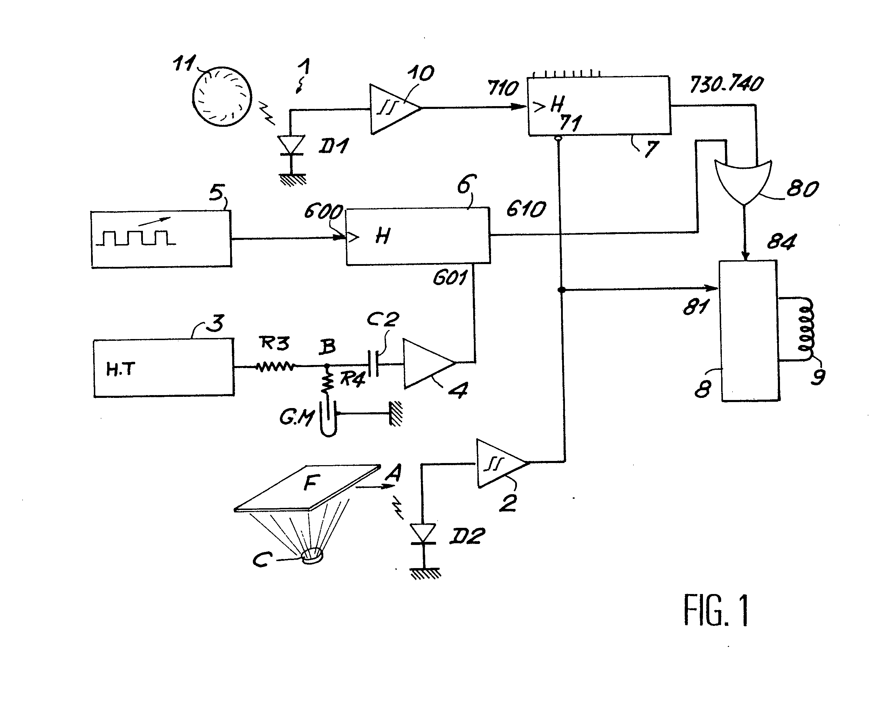

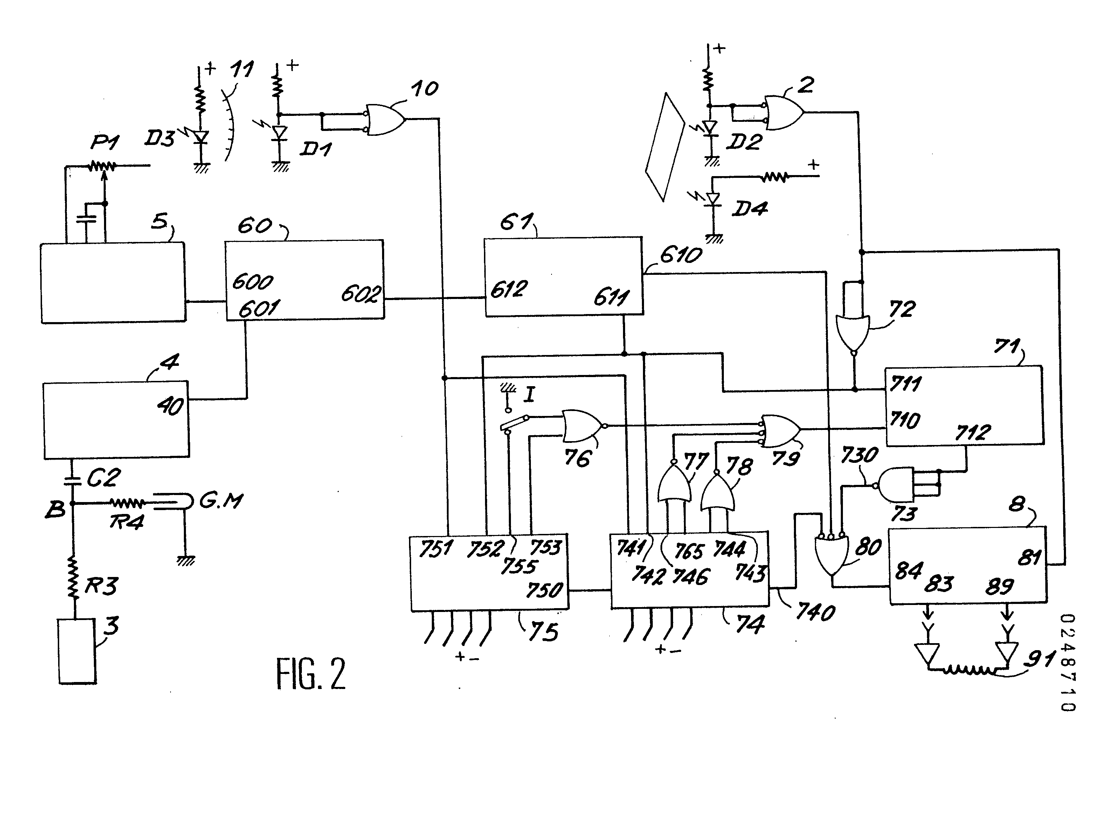

Le figure 1 représente une feuille F se déplaçant dans le sens de sa largeur indiquée par la flèche A sur un dispositif de transport non représenté qui peut être constitué de façon connue, par un système à galets et courroies. La feuille F vient s'interposer au passage entre un compteur geiger-Müller (GM) et une source C de particules Bêta constituée par exemple par du carbone 14. Le compteur GM est alimenté par une source d'alimentation haute tension (3) dont la sortie est reliée par deux résistances (R3, R4), placées en série, à l'anode du compteur (GM). Le point commun B aux deux résistances (R3, R4) est relié par un condensateur C2 à un circuit (4) de mise en forme des impulsions du compteur (GM). Le signal de sortie du circuit de mise en forme (4) constitué par des impulsions de fréquence moyenne $F_G$, représentative du nombre d'électrons bêta qui atteignent le compteur en un temps donné, est envoyé sur une entrée (601) d'un circuit discriminateur de fréquence (6) dont une deuxième entrée (600) reçoit la sortie d'un circuit oscillateur (5) délivrant un signal de fréquence $F_0$ réglable de façon connue par un potentiomètre (PI, fig.2). La sortie (610) du circuit discriminateur (6) est envoyée sur une porte OU (80) dont la sortie commande une bascule (8) de type D. Cette bascule (8) lorsqu'elle est armée par la sortie du circuit (80) provoque l'alimentation d'une bobine (9) constituant le moteur d'un système d'aiguillage disposé dans le dispositif de transport des feuilles, sur le trajet des feuilles en aval du compteur (GM) et de la source C, de façon à aiguiller les feuilles soit vers une case de récupération (non représentée), soit vers la sortie de distribution. Cette bascule (8) est désarmée à la fin du passage d'une feuille par un circuit indiquant la présence ou l'absence d'une feuille constituée par une diode photo-réceptrice (D2) branchée à l'entrée d'un circuit (2) de mise en forme du signal de la diode (D2). La sortie de ce circuit (2) est branchée d'une part à l'entrée de désarmement (81) de la bascule (8), d'autre part après inversion à l'entrée (71) d'un circuit logique (7) permettant de déterminer les documents dont la largeur est, soit trop courte, soit trop longue par rapport à une valeur moyenne. Ce circuit (7) reçoit sur son entrée d'horloge H (710) le signal de sortie d'un circuit (10) de mise en forme des impulsions fournies par un photo-récepteur (D1) placé d'un côté d'une roue codeuse (11) comportant des fentes permettant l'éclairement du photo-récepteur (D1). De façon connue cette roue codeuse (11) est solidaire des galets d'entraînement du dispositif de transport des feuilles et délivre des impulsions dont le nombre est proportionnel à la distance parcourue par une feuille. Le signal délivré par la sortie du circuit discriminateur (6) au circuit (80) indique les feuilles dépassant une certaine épaisseur. La sortie du circuit (80) qui arme la bascule (8) permet donc d'éliminer du dispositif de transport les feuilles dont la largeur est trop longue ou trop courte ou dont l'épaisseur est trop élevée. Ce dispositif peut être utilisé pour, par exemple, la détection de billets de banque doubles.

Le principe de la détection est le suivant : La source èmet des électrons bêta qui sont comptés par le compteur (GM) et son circuit associé de façon à déterminer le nombre d'électrons qui atteignent le compteur en un temps donné. L'interposition d'une épaisseur de feuille ou de billet entre la source et le détecteur provoque une diminution du comptage de l'ordre de 40%. L'interposition de deux épaisseurs de billet ou de feuille provoque une baisse du comptage encore plus grande, de l'ordre de 80% par rapport à une épaisseur simple. Ces contrastes de comptage, relativement importants, permettent la détection des surépaisseurs suivant une procédure consistant à rejeter tous les objets pendant le passage desquels le nombre de coups acquis est inférieur à un seuil donné. La rapidité de réaction du compteur (GM) permet de contrôler des feuilles ou des billets défilant dans le sens de leur largeur (environ 8 cm) à une vitesse de 1 à 2 m/s . Ce principe fonctionne efficacement pour la détection des feuilles à fort taux de recouvrement, tandis que la détection des feuilles doubles présentant un faible taux de recouvrement s'avère difficile en raison du temps très court imparti pour effectuer la mesure. Pour surmonter cette difficulté, on utilise un discriminateur de fréquence qui, par ailleurs, rend le système peu sensible à la valeur de la vitesse de défilement des billets. Pour détecter les très faibles recouvrements, on mesure la largeur de chaque objet à l'aide de la roue codeuse associée à des cellules photo-électriques. Tous les objets dont la largeur est supérieure à celle d'une feuille ou d'un billet standard sont éliminés. Ainsi les billets à faible taux de superposition sont détectés très facilement par la mesure de leur largeur et les billets complètement superposés sont détectés par la diminution de comptage qu'ils provoquent.

La détection des billets doubles n'est réalisée par une seule des deux méthodes possibles que dans les cas extrêmes : recouvrement très faible ou quasi total. Dans les cas intermédiaires, les deux méthodes sont opérationnelles simultanément.

La figure 2 représente le schéma général des circuits électroniques, dans lequel le circuit de détection de présence ou d'absence de feuilles est constitué par une diode électroluminescente (D4) alimentée de façon connue et dont la lumière est réfléchie par la présence d'une feuille en direction d'une diode photo-réceptrice (D2), branchée de façon connue par l'intermédiaire d'une résistance à une source de tension. Le signal prélevé entre la diode photo-réceptrice (D2) et la résistance est envoyé sur un trigger de Schmitt (2) pour mise en forme des impulsions. La sortie du trigger de Schmitt (2) est reliée d'une part à l'entrée d'un circuit inverseur (72), d'autre part à l'entrée (81) de validation d'une bascule (8) dont l'entrée de commande (84) reçoit la sortie d'un circuit OU (80). La sortie du circuit OU (80) représente les informations correspondantes aux 3 éventualités suivantes : feuille trop épaisse, trop longue, trop courte. Dans l'un de ces trois cas suivants la sortie OU (80) commande par l'entrée (84) la bascule (8) dont les sorties (82, 83) sont reliées au bobinage (9) d'un moteur de commandes de l'aiguillage d'élimination des feuilles trop épaisses, trop longues, trop courtes. La commande (84) provoque donc aux bornes de la bobine (9) une inversion de polarité assurant le basculement de l'aiguillage. L'élèment de détection de présence d'une feuille est situé à l'aplomb du tube du compteur (GM) et permet de signaler par un créneau positif, à la sortie du circuit (2), la présence d'un billet. Le front avant de ce créneau valide par l'entrée (81) la bascule (8). Les signaux correspondant aux informations feuilles trop longues, feuilles trop courtes sont délivrés par, respectivement, les sorties (74, 73) d'un circuit (7) de contrôle de la longueur. Ce circuit comporte une roue codeuse (11) solidaire en rotation du dispositif de transport des feuilles et dont les fentes sont éclairées d'un côté par une diode électroluminescente (D3) alimentée de façon connue au travers d'une résistance par une source de tension. Une diode photo-réceptrice (D1), alimentée également au travers d'une résistance par une source de tension, délivre les impulsions représentatives du déplacement à un trigger de Schmitt (10) assurant la mise en forme des signaux. La sortie du circuit (10) est reliée d'une part à l'entrée (751) d'horloge d'un premier décompteur (75) et d'autre part à l'entrée (741) d'horloge d'un deuxième décompteur (74). Ces deux décompteurs sont préchargés à une valeur déterminée par câblage, à la réception du signal délivré par la sortie de l'inverseur (72) qui est branchée d'une part à l'entrée (752) de validation du chargement du premier décompteur (75) et d'autre part à l'entrée (742) de validation du chargement du deuxième décompteur (74). Les deux décompteurs sont donc préchargés pendant l'absence de billets par le signal provenant de la sortie de l'inverseur (72) et décrémentés par chacune des impulsions délivrées par la roue codeuse (11) et la photo-diode (DI). Le préchargement des décompteurs est effectué à une valeur correspondant à la largeur normale d'une feuille. Lors du passage d'un billet trop long, le contenu des décompteurs passe par 0 et provoque sur les sorties série (750, 740) l'émission d'une impulsion de retenue qui déclenchera le dispositif d'éjection (8, 9) Les feuilles de dimensions trop courtes sont détectées par le circuit ci-après, constitué par une porte NON-OU (76) à deux entrées dont les deux entrées sont reliées aux bits de poids 1 et 2 constituées par les sorties (753 et 755) du décompteur (75). La sortie de la porte NON-OU (76) est reliée à une des entrées d'une porte NON-ET (79) à trois entrées. Les deux autres entrées de la porte (79) reçoivent les sorties des deux portes NON-OU à deux entrées (77, 78). Les entrées de la porte NON-OU (78) sont reliées aux sorties (744, 743) respectivement correspondant aux bits de poids 0 et 1 du décompteur (74). Les entrées de la porte NON-OU (77) sont reliées aux sorties (745, 746) respectivement correspondant aux bits de poids 2 et 3 du décompteur (74). Un interrupteur (I) permet de sélectionner la fenêtre de tolérance de largeur des feuilles. L'interrupteur (I) lorsqu'il est dans la position indiquée sur la fig. 2, sélectionne une largeur de fenêtre correspondant à 7 impulsions de la roue codeuse. Puisque la sortie (755) correspond aux bits de poids 2 et la sortie (753) correspond aux bits de poids 1, ce qui correspond au code binaire du chiffre 6, à la septième impulsion les sorties (755, 753) sont à 0 et par conséquent la sortie du circuit (76) est à 1. De même les sorties des circuits (78 et 77) sont à 1 lorsque le décompteur (74) passe à 0. Dans tous les autres cas au moins une des sorties des circuits (76, 77, 78) est au niveau 1 et par conséquent la sortie de la porte NON-ET (79) est à 1. Lorsque la largeur des billets reste comprise dans la fenêtre sélectionnée par la position de l'interrupteur I, la sortie du circuit (79) reste à 0. Dès que la largeur d'une feuille est, soit supérieure, soit inférieure, à la fenêtre, la sortie du circuit (79) passe au niveau 1. La sortie du circuit (79) est envoyée sur l'entrée d'horloge (710) d'une bascule (71) qui reçoit sur son entrée de validation (711) le signal de sortie de l'inverseur (72) indiquant la présence de feuilles. La bascule (71) étant validée par le signal de présence de la feuille voit sa sortie Q (712) changer de niveau, lorsque la sortie du circuit (79) change de niveau. Le signal de sortie (712) est envoyé par l'intermédiaire d'un inverseur (73) au circuit OU (80) de commande de la bascule d'éjection (8). Ce signal (730) délivré par l'inverseur (73) sera indicatif des feuilles de largeur trop faible. Lorsque l'interrupteur (I) au lieu d'être relié à la sortie (755) du décompteur (75) est relié à la masse, la fenêtre de tolérance de la largeur des feuilles correspond dans ce cas à 3 impulsions de la roue codeuse.

Le signal de la sortie (610), indicatif de l'épaisseur des feuilles, est généré de la façon suivante. Le compteur (GM) est alimenté par une source d'alimentation en haute tension au travers d'une résistance R3 de 22 M$\Omega$ et d'une résistance R4 de 1 M$\Omega$. Le point commun B de ces deux résistances est relié par un condensateur C2 à un circuit (4) de mise en forme des impulsions délivrées par le compteur (GM) lors de la réception des particules bêta. La sortie de mise en forme (4) est constituée par un bistable de type "D" rebouclé. La sortie (40) de ce circuit (4) est reliée à l'entrée de validation (601) d'un compteur (60). L'entrée d'horloge (600) de ce compteur (60) est reliée à un oscillateur (5) dont la fréquence $F_o$ peut être réglée au moyen d'un potentiomètre P1. Le compteur (60) est de capacité k avec K = 16. L'oscillateur (5) de fréquence $F_o$ incrémente en permanence le compteur (60). La sortie du circuit (4) èmet des impulsions à une fréquence $F_g$ qui correspond à la fréquence des particules reçues par le compteur (GM). Lorsque cette fréquence $F_g$ est inférieure à $k.F_o$ le compteur (60) déborde et une impulsion est émise sur la sortie (602) de débordement du compteur. Cette sortie (602) est reliée à l'entrée (612) d'un diviseur par 2 (61) dont l'entrée de validation (611) est reliée à la sortie de l'inverseur (72). La sortie (610) de ce diviseur par 2 est reliée au circuit (80) et le signal de cette sortie indique les feuilles trop épaisses. Les impulsions transmises par la sortie (602) et le circuit (80) provoquent le basculement du dispositif d'éjection (8, 9). En présence d'une seule épaisseur de feuille, la fréquence $F_g$ des impulsions du tube (GM) est suffisamment élevée pour empêcher tout débordement du compteur (60) et la feuille poursuit son trajet normal. Le diviseur par 2 (61) n'èmet un ordre de rejet à sa sortie (610) qu'après avoir reçu deux impulsions de débordement successives sur son entrée (612). Ceci permet d'éviter de provoquer le rejet des feuilles simples, par suite d'une impulsion de débordement aléatoire provoquée par des fluctuations statistiques de l'émission électronique de la source de carbone 14. Enfin on remarquera que la résistance R4 de 1 MΩ permet de limiter l'intensité du courant de crête délivré par le tube (GM) et que la résistance R3 de valeur très élevée permet en allongeant la constante de temps du système constitué par le tube (GM) et le condensateur C2 d'allonger le temps mort entre les impulsions délivrées par le tube. Cette disposition permet de limiter le taux de comptage des particules, taux de comptage qui devrait être très élevé en l'absence de billets. Co-relativement cette disposition permet de prolonger notablement la durée de vue du tube.

Il est bien évident que d'autres modifications à la portée de l'homme de métier font également partie de l'esprit de l'invention. Ainsi une méthode plus simple qui consiterait à mesurer le taux de comptage pendant le passage des feuilles et à suivre son évolution fait également partie de l'invention. Cependant compte tenu des conditions de mesures imposées : vitesse de défilement des billets (2 m/s) avec un recouvrement minimal des feuilles de l'ordre de 3 cm, la durée utile de mesure n'est plus que de 15 ms. D'autre part les taux de comptage observés sont assez faibles en raison des caractéristiques de la partie nucléaire de l'appareil (nature et fluence de la source, sensibilité du tube (GM)). Avec une épaisseur de papier on comptera environ 1800 coups et avec deux épaisseurs on comptera 350 coups par seconde. Les nombres de coups acquis en 15 ms seraient de 27 et 5 respectivement. Enfin, pour que l'importance relative des zones à cheval (sur la feuille simple et la feuille double soit négligeable, il faudrait fractionner le comptage en durée très précise par exemple 1 ms). Cette méthode bien que possibleB 911ï.3 nécessiterait l'emploi d'un microprocesseur spécifique pour gérer l'acquisition de ces données et leur traitement ultérieur. Ceci conduirait donc à un dispositif relativement complexe. Le résultat de la mesure feuille simple ou double ne serait connu qu'à l'expiration d'un certain délai, nécessaire à l'exécution du calcul et faisant suite au passage de l'objet à contrôler.

Ceci met en évidence l'intérêt de la méthode préférentielle de l'inveniton qui consiste à utiliser un compteur (60) pour jouer un rôle de discriminateur de fréquence de façon à ce que la mesure devienne effective dés que la surépaisseur se trouve interposée entre la source et le détecteur et à ce que l'acquisition de traitement de la mesure soit réalisé globalement en temps réel.

Le tube compteur Geiger-Müller a été choisi essentiellement pour des raisons de prix. D'autres types de détecteurs (germanium, silicium ou iodure mercurique) pourraient être utilisés sans remettre en cause le principe de la mesure.

## Revendications

1. Procédé de détection de feuilles superposées par évaluation de leur masse surfacique caractérisé en ce qu'il comprend les étapes suivantes :
    - défilement des feuilles orientées suivant un sens donné entre une source (C) de particules et un détecteur de particules (GM);
    - comptage du nombre de particules reçues par le détecteur par mesure de la fréquence $F_g$ des impulsions du détecteur (GM) pour déterminer la masse surfacique ;
    - élimination des feuilles à fort taux de superposition par comparaison de la fréquencé de comptage avec une valeur limite.

2. Procédé selon la revendication 1, caractérisé en ce que la comparaison à une valeur limite de la fréquence $F_g$ des impulsions du détecteur (GM) est obtenue par discrimination entre la fréquence $F_g$ des impulsions du détecteur et la fréquence $F_o$ des impulsions d'un oscillateur (5).

3. Procédé selon une des revendications précédentes caractérisé en ce qu'il comprend l'élimination des feuilles doubles à faible taux de superposition par mesure de leur largeur par l'intermédiaire d'une roue codeuse (11) associée au système de transport et délivrant un nombre d'impulsions proportionnel à la rotation pendant le temps de passage de la feuille pour décrèmenter un décompteur (75, 74) préchargé à une valeur moyenne représentative d'une largeur normale de feuille simple, l'ordre d'élimination correspondant au passage par un seuil du contenu du décompteur.

4. Procédé selon une des revendications précédentes caractérisé en ce qu'il comprend également l'élimination des feuilles trop courtes par un circuit logique (71, 76, 77, 78, 79) branché sur la sortie du décompteur (75, 74) èmettant un ordre d'élimination si au moment où le signal issu d'un circuit (D2, 2) de détection de présence de feuille disparaît, le contenu de ce décompteur n'a pas encore atteint une valeur minimale prédéterminée.

5. Procédé selon une des revendications précédentes caractérisé en ce que la discrimination est réalisée par détection du débordement d'un compteur (60) dont l'entrée de validation (601) reçoit la fréquence $F_g$ du compteur (GM) et l'entrée d'horloge (600) la fréquence $F_o$ de l'oscillateur (5).

6. Dispositif permettant la mise en oeuvre du procédé selon une des revendications précédentes caractérisé en ce qu'il comprend une source (C) de particules bêta et un compteur Geiger-Müller (GM) disposés de part et d'autre d'un trajet de transport de feuilles, un compteur (60) validé par les impulsions du compteur Geiger (GM) et commandé par un oscillateur (5) délivrant un signal de fréquence $F_o$, la sortie de

débordement (602) du compteur délivrant un signal indiquant en cas de débordement un fort taux de superposition des feuilles, une roue codeuse (11) associée au dispositif de transport de feuilles le long du trajet, les impulsions de la roue codeuse (11) décrémentant un décompteur (75, 74) préchargé à une valeur moyenne représentative d'une largeur normale de feuille, un circuit (D2, 2) de détection de la présence d'une feuille et un circuit logique (71, 76, 77, 78, 79, 80) prenant en compte les signaux de sortie du circuit de détection de présence de feuilles, du compteur (60), du décompteur (75, 74) pour provoquer ou non l'élimination des feuilles par l'élèment moteur (9) d'un aiguillage disposé dans le trajet de transport en aval de la source bêta (C) et du compteur Geiger (GM) par rapport au sens du déplacement des feuilles.

7. Dispositif selon la revendication 6, caractérisé en ce qu'une résistance (R4) élevée est branchée en série sur la sortie d'un circuit (3) d'alimentation haute tension du compteur Geiger (GM) pour limiter l'intensité du courant crête délivré par le compteur Geiger (GM).

8. Dispositif selon la revendication 7, caractérisé en ce qu'une deuxième résistance (R3) très élevée est branchée en série entre la sortie du circuit d'alimentation haute tension (3) et la résistance (R4) pour allonger le temps mort du compteur Geiger (GM) en vue de limiter le taux de comptage en l'absence de feuilles.

9. Dispositif et procédé selon une des revendications précédentes caractérisé en ce qu'ils sont appliqués aux billets de banque.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 331 241  (SMIRIN) <br><br> * Résumé * | 1,3,6, 9 | G 07 D    1/00 <br> B 65 H    7/12 <br> G 01 B   15/02 |
| | --- | | |
| Y | US-A-3 795 395  (MOSLER SAFE) <br><br> * Résumé; colonne 10, lignes 1-17 * | 1,3,6, 9 | |
| | --- | | |
| A | GB-A-2 106 081  (DIEBOLD) <br> * Page 2, lignes 25-39 * | 2-6,9 | |
| | --- | | |
| A | WO-A-8 302 513  (NCR) | | |
| | ----- | | |

| DOMAINES TECHNIQUES RECHERCHES (Int. Cl.4) |
|---|
| B 65 H <br> G 01 B <br> G 01 D <br> G 07 D <br> G 06 K |

Le présent rapport de recherche a été établi pour toutes les revendications

| Lieu de la recherche | Date d'achèvement de la recherche | Examinateur |
|---|---|---|
| LA HAYE | 07-09-1987 | HOORNAERT W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82